# EUROPEAN PATENT SPECIFICATION

(11) **EP 3 755 940 B1**
(45) Date of publication and mention of the grant of the patent: **13.03.2024**
(21) Application number: 19741483.2
(22) Date of filing: 18.01.2019
(51) Int. Cl.: F17C 13/02, B65D 47/04

(54) **HEAD FOR A STORAGE CONTAINER FOR LIQUIDS**
KOPF FÜR EINEN AUFBEWAHRUNGSBEHÄLTER FÜR FLÜSSIGKEITEN
TÊTE POUR RÉCIPIENT DE STOCKAGE DE LIQUIDES

(30) Priority: 19.01.2018 PL 42431618
(43) Date of publication of application: 30.12.2020
(73) Proprietor: CRYO - SCIENCE SP. Z O.O., 55-040 Bielany Wroclawskie (PL)
(72) Inventor: PIETRYGA, Piotr, 55-200 Karwiany (PL)
(74) Representative: Witek, Rafal
(86) International application number: PCT/PL2019/050003
(87) International publication number: WO 2019/143260

(56) References cited:
- EP-A1- 0 670 452
- EP-A2- 0 175 047
- WO-A1-90/08304
- WO-A1-2008/085005
- GB-A- 2 070 434
- JP-A- 2000 018 494
- JP-A- 2000 018 494
- PL-Y1- 62 173
- US-A- 2 963 908
- US-A- 3 279 252
- US-A- 4 198 828
- US-A- 5 339 689
- US-A- 5 393 736
- US-B2- 8 403 000

## Description

The invention relates to a functional closure head for a non-pressurised liquid container. The invention can be applied in containers for transport and storage of liquids, particularly cryogenic liquids, under non-pressurised conditions.

Storage of liquids constitutes one of fundamental types of storage. Edible, technical, industrial types of liquids are stored. They are stored in conditions, in which obtaining pressure inside the container is required to maintain the liquid phase, and under atmospheric pressure conditions. Each of these cases requires a container that is closed by a functional cover. Its design complexity level and functions depend on the liquid being stored. Liquefied gases, such as helium, nitrogen, or technical gas mixtures like propane/butane, can be classified as liquids. They require specialised storage conditions, especially those having a low boiling point (helium, propane/butane), as well as dedicated solutions related to the container closures. One distinct example of such a gas is nitrogen. Nitrogen can be stored in pressurised containers, which facilitates its evacuation from the container, as well as in non-pressurised containers. In case of pressurised containers, closures requiring special training or qualified personnel are applied. Operating a non-pressurised container is definitely easier. The structure of closures for pressurised containers is simpler. The change of design enables filling and storing the liquid, as well as using it by unqualified personnel. Nonetheless, present solutions for measuring the nitrogen inside the container require constant connection to the main power supply, which is not possible for mobile devices or can limit their functionality.

Design solutions for closures for liquid nitrogen storage containers are known in the art.

US5488831 discloses a closure structure comprising a plug with a through-opening, a second opening closed with a bottom, in which a handle for lifting the plug is located. The first opening comprises a profiled tube with a crimp on one end (the one located inside the container), and a bronze filter on the other end. The closure according to the cited document allows only for pumping out the contents of the container, with no possibility of controlling the level of fluid after closing the container. In order to fill the container, it is necessary to open it and supply the fluid directly through the neck of the container.

Another document, US4841969, describes a device for evaporating the nitrogen from the container. The device consists of two elements: the interior and the exterior one. The interior element is constituted by a heater placed on the wall and on the bottom of the container. The exterior element is shaped as a ring, which is mounted on the neck of the nitrogen container. Inside the ring, the heater switch, fuses and the time controller are placed. The container neck is closed by a cover with a profiled tube outlet. The solution according to the cited document requires direct connection to the main power supply. It is also impossible to control the amount of fluid inside the container after turning the heater on. In order to refill the container, the cover with the profiled tube needs to be removed.

Document CN2058476U discloses a utility model for an automatic injector for a liquid nitrogen container comprising a nozzle, a cover, a conduit, a partition board plug, a resistance wire, a decompressing nozzle, a voltage regulator, a decompressing valve. The nozzle has a supporting and inserting connection to a liquid nitrogen Dewar bottle. The resistance wire is switched on to heating, which can cause evaporation of liquid nitrogen and an increase in pressure in the dew bottle, then the liquid nitrogen is ejected out automatically from the nozzle. The disclosed device operates only under conditions of constant power supply from an outside network. Operation takes place only in one direction, i.e. there is no possibility to apply it to fill the container.

Document JP2000018494A discloses a device for supplying liquid nitrogen to analytical and research apparatuses. The main body is placed in the neck of the liquid nitrogen container. In the lower part of the body, through-holes are located, in which the liquid nitrogen outlet pipe and the liquid nitrogen heater shaft are placed. On the heater shaft, nitrogen level point sensors are located, distributed thereon in three places spaced from each other. In the lower part of the body, a safety valve is also located. The liquid nitrogen outlet pipe ends with a flange and a screw connection enabling connecting to an external apparatus. In the upper part of the body, a controller with a display and connection to the main power supply are located. Discharging the nitrogen takes place by obtaining a nitrogen vapour pressure in the container, which consequently pushes out the liquid through the outlet pipe. This solution does not allow filling and discharging the liquid nitrogen container without disassembling it. Moreover, it also requires an outside power supply. The nitrogen level inside the container is monitored in three points, which prevents accurate measuring of it.

Therefore, there is still a need for closure for non-pressurised containers for storing liquids, which would allow for convenient maintenance, i.e. filling with the liquid, easy evacuation, mobility, i.e. without the necessity of constant plugging to the external power supply, and where constant measuring of the liquid level in the container would be possible with high accuracy, also during maintenance, which would prevent overfilling with liquid over a safe level. Surprisingly, the above mentioned problems were solved by the present invention.

The invention relates to a head for a container for storage of fluids, comprising a head body, characterised in that a through sleeve is located inside the head body, wherein a protection tube is coupled to the through sleeve in the lower part of the head body, and a liquid level capacitive sensor is mounted in the lower part of the body, a gland coupled with a flange to an electronic junction box powered by a battery or an accumulator is located in the upper part of the body, comprising a circuit board equipped with a microcontroller and a diode gauge, and conduits terminated with a plug extend from the box. Microcontroller receives a signal from the capacitive sensor related to the present nitrogen level, the signal is processed and the level value is presented on a bargraph in a 10-step scale, additionally, during refilling of the container, the increase of nitrogen level is signalled by an intermittent sound in range of 95% to 99%, and a constant sound signal at 100% fill, after connecting the head to the device, the sensor switches its power supply to the power supply from the device, after disconnecting the sensor again, it is only necessary to prompt the sensor using a push-button, mounted on the electronic junction box (4), in order to switch the power supply to the battery or accumulators, moreover, the sensor has a programmed function of temporary shutting down the power supply if the device is disconnected from the power supply, in order to prevent battery/accumulator discharge, the electrical junction box is connected to the device with conduits terminated with a plug, one of these conduits relays information about the present nitrogen level, which can be displayed on the device screen. The connection is used also for calibrating the sensor, determining the extreme capacities of the capacitor (0% and 100% nitrogen level). The protection tube is perforated. Preferably, the capacitive sensor comprises a cylindrical capacitor with varying electric permittivity, comprising a tube with a core of length equal to the length of the tube placed inside it, and spacers made of non-conductive material are placed on the core, wherein electrical conduits are connected to the upper endings of the tube and the core. In a preferred variant of the embodiment of the invention, a heater ending with a heating spiral is mounted in the lower part of the body. The liquid nitrogen, flowing from the bottom to the vertically mounted sensor sets on the same level as the nitrogen in the entire container. Thus, the content of the capacitor changes, which allows computing the current nitrogen level. A suitable structure of the head provides secure operation of the device. During proper use, the head is not removed from the container (the fastening is sealed). This prevents the operator, or a person performing the filling, from contacting the liquid (e.g. liquid nitrogen) and the heating element. Additionally, the head is equipped with a perforated tube, enabling placing the rod / filling hose inside the container. It lowers the probability of burning with the fluid during filling and simultaneously protects from damaging the liquid level sensor/meter. The liquid nitrogen level meter functions based on the operation of the capacitive sensor, i.e. the cylindrical capacitor with varying electric permittivity between the plates (along with the change of liquid nitrogen level). The complex of sensor core, outside tube, spacers, and mounting elements is coupled to the head. The electronic junction box mounted on the outside of the non-pressurised container is an integral part of the sensor. The electrical junction box is equipped with battery power supply and a diode gauge. This way, when the container is disconnected from the rest of the device, it is possible to observe the nitrogen level inside the container on a 10-step scale in real time. Additionally, during filling, if the maximum nitrogen level is reached inside the container, an acoustic signaller (a buzzer) is activated inside the box, warning about overflow.

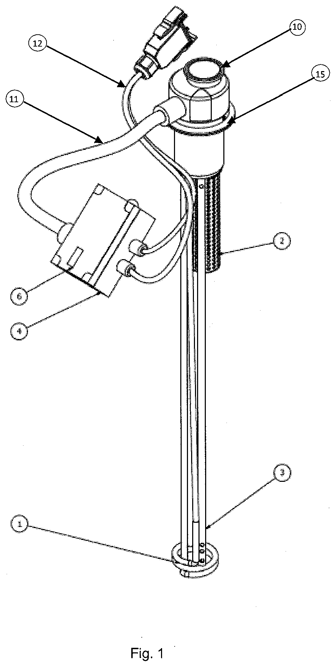

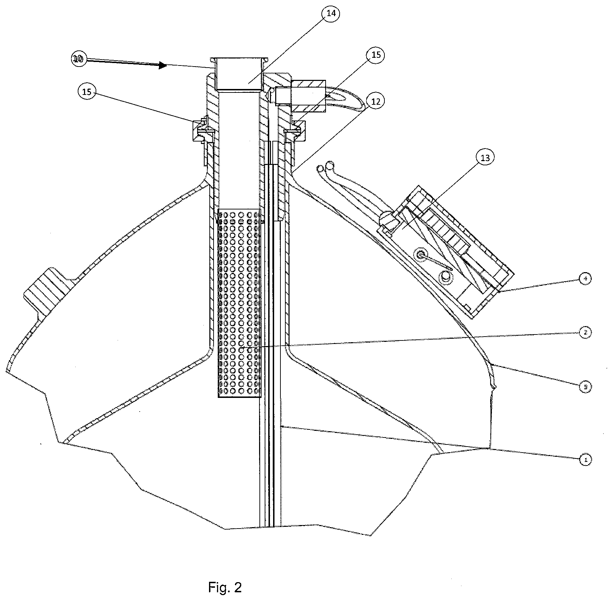

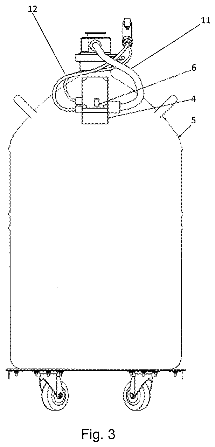

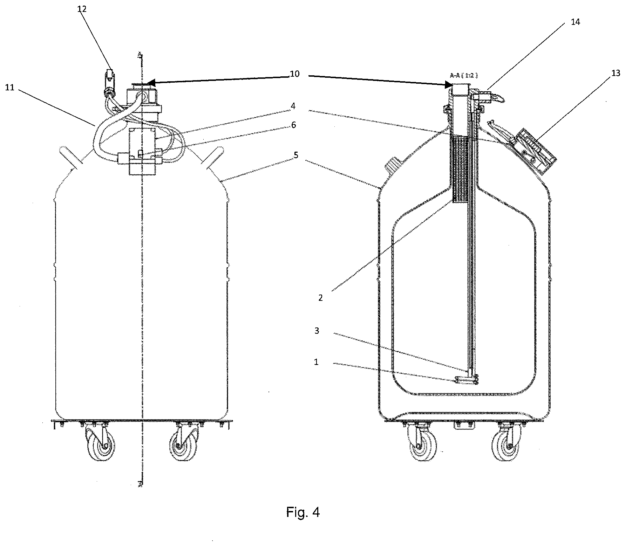

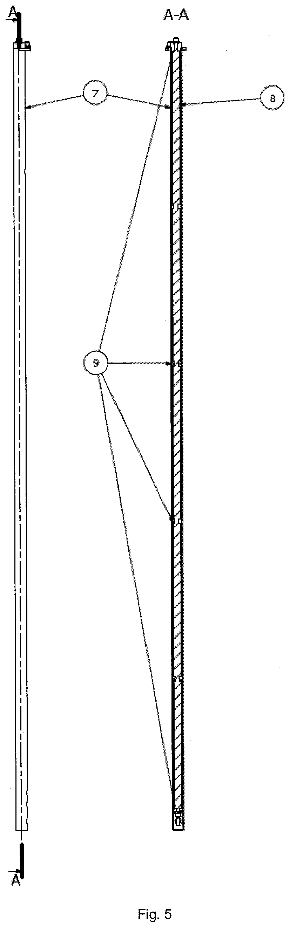

The embodiments of the invention have been presented on the drawing, where fig. 1 illustrates the head assembly for a storage container for fluids, fig. 2 illustrates a cross-section of the head placed in the container, fig. 3 illustrates an elevation view of the outside surface of the container with a mounted head and visible electronic junction box, fig. 4 illustrates an elevation view of the container presenting the placement of the head on the outside surface of the container relative to the placement of the head elements inside the container, and fig. 5 illustrates the fluid level sensor and its cross-section.

### Example

The head of a storage container 5 for fluids comprises a head body, comprising a through sleeve 10, wherein a perforated protection tube 2 is coupled to the through sleeve 10 in the lower part of the head body. A capacitive liquid level sensor 3 is mounted in the lower part of the body, and a gland coupled with a flange to an electronic junction box 4 powered by a battery or an accumulator is located in the upper part of the body, comprising a circuit board equipped with a microcontroller and a diode gauge 6. Conduits terminated with a plug extend from the electronic junction box 4. Additionally, a heater 1 ending with a heating spiral is mounted in the lower part of the body. The capacitive sensor 3 comprises a cylindrical capacitor with varying electric permittivity, comprising a tube 7 with a core 8 of length equal to the length of the tube placed inside it, and spacers 9 made of non-conductive material are placed on the core, wherein electrical conduits are connected to the upper endings of the tube and the core. The invention is applied in a device used for local cryotherapy. A hose is connected to the outside outlet of the head. After turning on the heater, the temperature inside the container rises, as a consequence of that, the nitrogen starts to evaporate more intensely through the coupled hose. The operator observes the nitrogen level decrease in real time. When the level reaches minimum, it is safe to fill the container. In order to prepare the container for secure filling, the sensor is prompted with a push-button. The power supply is then connected to the batteries/accumulators. The filling is commenced, which, due to the perforated tube installed, limits the risk of the liquid fraction of the fluid leaving the container. During refilling of the container, the nitrogen level is observed on a specialised bargraph. This enables controlling the filling level of the container. In the liquid level measuring assembly, a box with battery power supply is present, which allows measuring the liquid level inside the container without the external power supply.

## Claims

1. Head for a storage container (5) for fluids, comprising a head body, **characterised in that** a through sleeve (10) is located inside the head body, wherein a protection tube (2) is coupled to the through sleeve (10) in the bottom part of the head body, and a liquid level sensor (3) is mounted in the lower part of the body, a gland (14) coupled with a flange (11) to an electronic junction box (4) powered by a battery or an accumulator is located in the upper part of the body, comprising a circuit board equipped with a microcontroller (13) and a diode gauge (6), and conduits terminated with a plug (12) extend from the electronic junction box (4), and the head body comprises a flat coupling flange (15) in its lower part, wherein the protection tube (2) is perforated.

2. The container head according to claim 1, **characterised in that,** a heater (1) ending with a heating spiral is mounted in the lower part of the body.

3. The container head according to claim 1, **characterised in that** the liquid level sensor (3) is a capacitive sensor.

4. The container head according to claim 3, **characterised in that,** the liquid level capacitive sensor (3) comprises a cylindrical capacitor with varying electric permittivity, comprising a tube (7) with a core (8) of length equal to the length of the tube (7) placed inside it, and spacers (9) made of non-conductive material are placed on the core (8), wherein electrical conduits are connected to the upper endings of the tube (7) and the core (8).

## Patentansprüche

1. Aufsatz für einen Vorratsbehälter (5) für Flüssigkeiten, umfassend einen Aufsatzkorpus, **dadurch gekennzeichnet, dass** sich eine Durchsteckhülse (10) innerhalb des Aufsatzkorpus befindet, wobei im unteren Teil des Aufsatzkorpus ein Schutzrohr (2) an die Durchsteckhülse (10) gekoppelt ist und im unteren Teil des Korpus ein Flüssigkeitspegelsensor (3) montiert ist, sich eine Stopfbüchse (14), die mit einem Flansch (11) an einen elektronischen Kabelkasten (4), der durch eine Batterie oder einen Akkumulator mit Strom versorgt wird, gekoppelt ist, im oberen Teil des Korpus befindet und eine Leiterplatte, die mit einem Mikrocontroller (13) und einer Diodenlehre (6) ausgestattet ist, umfasst und sich Leitungen, die mit einem Stecker (12) abschließen, von dem elektronischen Kabelkasten (4) weg erstrecken und der Aufsatzkorpus an seinem unteren Teil einen flachen Kopplungsflansch (15) umfasst, wobei das Schutzrohr (2) perforiert ist.

2. Behälteraufsatz gemäß Anspruch 1, **dadurch gekennzeichnet, dass** ein Heizgerät (1), das mit einer Heizspirale endet, im unteren Teil des Korpus montiert ist.

3. Behälteraufsatz gemäß Anspruch 1, **dadurch gekennzeichnet, dass** der Flüssigkeitspegelsensor (3) ein kapazitiver Sensor ist.

4. Behälteraufsatz gemäß Anspruch 3, **dadurch gekennzeichnet, dass** der Flüssigkeitspegelsensor (3) einen zylindrischen Kondensator mit variabler Dielektrizitätskonstante umfasst, ein Rohr (7) mit einem in seinem Innern platzierten Kern (8) gleicher Länge wie das Rohr (7) umfasst; und sich Abstandshalter (9) aus nichtleitendem Material auf dem Kern (8) befinden, wobei elektrische Leitungen mit den oberen Enden des Rohrs (7) und dem Kern (8) verbunden sind.

## Revendications

1. Tête pour un récipient de stockage (5) de fluides, comprenant un corps de tête, **caractérisée en ce qu'**un manchon traversant (10) est situé à l'intérieur du corps de tête, dans laquelle un tube de protection (2) est couplé au manchon traversant (10) dans la partie basse du corps de tête, et un capteur de niveau de liquide (3) est monté dans la partie inférieure du corps, un fouloir (14) couplé avec une bride (11) à une boîte de jonction électronique (4) alimentée par une batterie ou un accumulateur est situé dans la partie supérieure du corps, comprenant une carte de circuit imprimé équipée d'un microcontrôleur (13) et d'une jauge à diode (6), et des conduits terminés par un bouchon (12) s'étendent à partir la boîte de jonction électronique (4), et le corps de tête comprend une bride de couplage plate (15) dans sa partie inférieure, dans laquelle le tube de protection (2) est perforé.

2. Tête de récipient selon la revendication 1, **caractérisée en ce que**, un élément chauffant (1) se terminant par une spirale de chauffage est monté dans la partie inférieure du corps.

3. Tête de récipient selon la revendication 1, **caractérisée en ce que** le capteur de niveau de liquide (3) est un capteur capacitif.

4. Tête de récipient selon la revendication 3, **caractérisée en ce que**, le capteur capacitif de niveau de liquide (3) comprend un condensateur cylindrique à permittivité électrique variable, comprenant un tube (7) avec un noyau (8) de longueur égale à la longueur du tube (7) placé à l'intérieur ; et des entretoises (9) en matériau non conducteur sont placées sur le noyau (8), dans laquelle des conduits électriques sont raccordés aux extrémités supérieures du tube (7) et du noyau (8).
